# EUROPEAN PATENT APPLICATION

(11) **EP 4 052 820 A1**
(43) Date of publication of application: **07.09.2022**
(21) Application number: 21185156.3
(22) Date of filing: 12.07.2021
(51) Int. Cl.: B22F 12/52, B29C 64/205, B29C 64/255, B33Y 10/00, B33Y 30/00, B29C 64/209, B29C 64/343, B22F 10/10, B22F 10/20

(54) **POWDER OR GRANULE DEPOSITION DEVICE CONFIGURED FOR THE MANUFACTURE OF OBJECTS BY ADDITIVE MANUFACTURING, ASSOCIATED SYSTEM AND PROCESS**

(30) Priority: 04.03.2021 PT 2021117100
(71) Applicant: Instituto Politécnico De Leiria, 2411-901 Leiria (PT)
(72) Inventor: DOS SANTOS MATEUS, ARTUR JORGE, 2400-187 LEIRIA (PT); GONÇALVES DA SILVA, RUBEN JOÃO, 2430-453 PICASSINOS (PT); MENDES GAMEIRO, FÁBIO ANDRÉ, 3100-670 POMBAL (PT); CARVALHANA PÓVOA, SÍLVIO MIGUEL, 2480-169 PORTO DE MÓS (PT); REIS MARQUES, LUÍS ANDRÉ, 2490-724 OURÉM (PT); DOS SANTOS, CYRIL, 2435-180 BARROCO (PT)
(74) Representative: Monteiro Alves, Inês

(57) **Abstract**

The invention refers to a powder or granule deposition device (1) configured for the manufacture of objects by additive manufacturing comprising a rigid body (2), wherein a vibration propagation element (7) is placed in the interior of the rigid body (2), and extends throughout the powders or granules storage section to a deposition nozzle for powders or granules (5); and a vibration element (8) is placed in contact with the vibration propagating element (7). The invention further contemplates an additive manufacturing system comprising a three-dimensional printer, a printer table (18) and the powder or granule deposition device (1).

The invention allows an adequate disaggregation and decompressing of the powders or granules in the interior of the deposition device and allows the production of objects with high geometric complexity by additive manufacturing, including from several different materials.

## Description

### TECHNICAL FIELD

The present invention refers to a device for deposition of materials, to an additive manufacturing system and to an additive manufacturing process.

### BACKGROUND ART

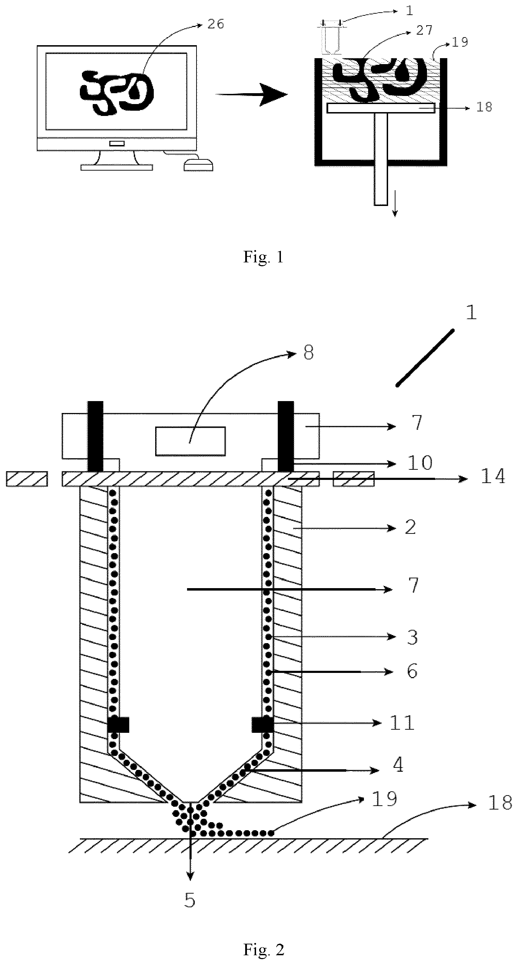

As illustrated in figure 1, additive manufacturing is a process for the creation of three-dimensional objects from a digital model, for example in CAD (*computer aided design*)*,* which is converted into STL language (*standard triangulation language*) and subsequently divided in layers by a slicing algorithm, thus creating detailed information about each transverse slice.

The creation of a printed component is carried out, by means of additive processes, wherein the object is created by a chain of successive layers of material until the product is complete, where the successive layers of raw material can be in the form of pastes or powders, as is generically illustrated in figure 1. Each one of these layers can be seen as a horizontal transverse section in thin slices.

The technologies for the additive manufacturing based on powder or granule deposition processes can use three-dimensional printing techniques (3DP) by means of binders (*Binder Jetting*); techniques for Powder Bed Fusion, for example the Selective Laser Sintering (SLS), Selective Laser Heat (SHS), Selective Laser Melting (SLM), Direct Metal Laser Sintering (DMLS), Selective Mask Sintering(SMS) and Electron Beam Melting (EBM); and Direct Energy Deposition techniques, for example Laser Metal Deposition (LMD), Direct Laser Deposition (DLD), Laser Engineered Net Shaping (LENS) and the Direct Laser Additive Construction (CLAD).

As an example, in the three-dimensional printing techniques (3DP) by binders, the three-dimensional printing machine begins the process of construction of the piece depositing a powder layer or line, over which the binder will be deposited in the geometry of the section of the part. The powder layer or line is then lowered, and a new powder layer or line is deposited over the first and the binder is once again deposited, making up the next slice of the model which is consolidated with the previous one by means of the binder. This process is repeated for all the layers of the part until it is printed. In case the raw materials of the successive layers are in powder form, once the part has been totally printed, the powder which has not come into contact with the binder is removed, the part is then cleaned and the prototype is consolidated.

### PRIOR TECHNIQUE PROBLEMS

The powder or granule deposition devices for additive manufacturing known from the state of the art present nozzles for deposition of materials that allow the deposition of lines of material, wherein each line has widths typically in the interval from 50 to 800 micrometers. The width of a material deposition trail can be influenced by several operational parameters, for example the width of the trail can be reduced as the dislocation speed of the deposition nozzle is increased along the printer table. However, the deposition devices of the state of the art present problems related to the compaction or aggregation of powders or granules stored in the deposition devices, namely in the deposition nozzles, which form strangulated flow areas. The agglomeration of the particulate material in the proximity of a deposition nozzle leads to significant variations in the release of materials for the printer table, resulting in uneven uniform material deposition trails and, consequently, a reduction in the quality of the objects produced by additive manufacturing.

The state of the art document (Chianrabutra et al. "A Dry Powder Material Delivery Device for Multiple Material Additive Manufacturing"; Engineering Sciences Unit, Faculty of Engineering and the Environment, University of Southampton) discloses a deposition device including a deposition nozzle, wherein a vibration system is installed externally to the deposition nozzle and to the storage chamber for the powders or granules. During the deposition of powders or granules, the vibration system transmits energy to the particles in the proximities of the deposition nozzle through the walls of the storage chamber. On the other hand, the deposition device disclosed in this document from the state of the art presents limitations that are inherent to the external installation of the vibration system which hinders the utilization of deposition devices arranged in parallel, since the deposition lines for materials would forcibly be more spaced, which conditions the manufacture of objects with higher precision and detail levels. Additionally, the solution disclosed in this document of the state of the art is also more negatively influenced by environmental issues, for example disturbances and vibrations that are induced by the dislocation itself of the printer table.

Thus, the development of deposition devices that have mechanisms for eliminating the compaction of powders or granules is desired, allowing the homogeneous deposition of lines, with a minimization of the external influences in the spatial dimensions of the lines deposited. Additionally, it is desirable that the deposition devices can be configured to deposit a plurality of lines in parallel, with a minimization of the distances between the referred lines, to enable to conduct the additive manufacturing processes with higher precision.

### SUMMARY OF INVENTION

The present invention refers, in a first aspect, to a powder or granule deposition device (1) configured for the manufacture of objects by additive manufacturing comprising a rigid body (2), wherein the referred rigid body (2) includes an upper inner section for storage of powders or granules (3), which communicates with an internal intermediary section for discharge of the powders or granules (4), which communicates with a deposition nozzle for powders or granules (5), wherein the referred powder or granule deposition device (1) presents the following additional characteristics:
a vibration propagating element (7) being arranged inside the rigid body (2) and extending along the upper inner section for storage of powders or granules (3) and by the intermediary inner section for discharge of powders or granules (4) to the deposition nozzle for powders or granules (5);
and by a vibration element (8) being positioned in contact with the vibration propagation element (7), being configured to generate vibrations in the referred vibration propagation element (7);
wherein the vibration propagation element (7) is connected to the rigid body (2) by at least one first flexible vibration damping element (10).

The present invention refers, in a second aspect, to an additive manufacturing system comprising a three-dimensional printer, a printer table (18) and a powder or granule deposition device (1) according to the first aspect of the invention.

The present invention refers, in a third aspect, to a process for additive manufacturing of an object which uses the additive manufacturing system, as defined in the second aspect of the invention, and which comprises the following steps:
i. feeding of at least one deposition device (1), as defined in the first aspect of the invention, with powders or granules (6);
ii. activation of the deposition device (1) by means of the activation of a vibration propagation element (7) by a vibration element (8);
iii. deposition by the deposition device (1) of a plurality of lines of powders or granules (19) over a printer table (18).

### SOLUTION TO PROBLEM

The present invention solves the problems of the prior art related to the agglomeration or compaction of powders or granules inside the deposition device (1) by the incorporation of a vibration propagation element (7), which is activated by a vibration element (8) and is inserted in the powder or granule storage chamber (6) inside the deposition device (1).

### ADVANTAGEOUS EFFECTS OF INVENTION

The deposition device (1) comprising in its interior a vibration propagation element (7) allows an adequate disaggregation and decompression of powders or granules inside the deposition device, particularly in the proximities of the powder or granule deposition nozzle (5). With the device of the present invention, the outer space surrounding the powder or granule deposition nozzle (5) is not occupied by peripheral systems, resulting in the possibility of being created matrices with rows of deposition devices (24), wherein the respective deposition nozzles are sufficiently close to have the deposition of lines with a relatively short distance between the deposited lines. In this manner, the system of the present invention allows the production of objects with more complex conformations and in a much more flexible manner by additive manufacturing, including from several different materials.

### BRIEF DESCRIPTION OF DRAWINGS

With the purpose of providing an understanding of the principles according to the embodiments of the present invention, reference will be made to the embodiments illustrated in the figures and to the terminology used to describe them. In any case, it must be understood that there is no intention of limiting the scope of the present invention to the content of the figures. Any subsequent alterations or modifications of the inventive characteristics shown herein, as well as any additional applications of the principles and embodiments of the invention shown, which would occur normally to a person skilled in the art having this description in hands, are considered as being within the scope of the claimed invention.
Figure 1 - illustrates obtaining an object prepared by additive manufacturing;
Figure 2 - illustrates a front view of a first embodiment of a deposition device according to the invention;
Figure 3 - illustrates a side view of a first embodiment of a deposition device according to the invention;
Figure 4 - illustrates an upper view of a first embodiment of a deposition device according to the invention;
Figure 5 - illustrates an upper view of an embodiment of an additive manufacturing system including a matrix of deposition devices according to the invention;
Figure 6 - illustrates a front view of a second embodiment of a deposition device according to the invention;
Figure 7 - illustrates a perspective view of an embodiment of an additive manufacturing system including a matrix for deposition devices according to the invention;
Figure 8 - illustrates an upper view of an embodiment of an additive manufacturing system including two matrices for deposition devices according to the invention;
Figure 9 - illustrates and upper view of three deposition devices according to the invention arranged in parallel;
Figure 10 - illustrates a perspective view of one embodiment of the additive manufacturing system including two matrices for deposition devices according to the invention with alignment lag;
Figure 11 - illustrates an upper view of an embodiment of the additive manufacturing system including a plurality of matrices for deposition devices according to the invention;
Figure 12 - illustrates an upper view of an embodiment of the additive manufacturing system including a plurality of matrices for deposition devices according to the invention, wherein each matrix is fed with a different deposition material;
Figure 13 - illustrates a side view of an embodiment of an additive manufacturing system including a plurality of rows of deposition devices according to the invention fed with different deposition materials;
Figure 14 - illustrates a side view of an embodiment of an additive manufacturing system including a plurality of rows of deposition devices according to the invention fed with different deposition materials and a compaction roll;

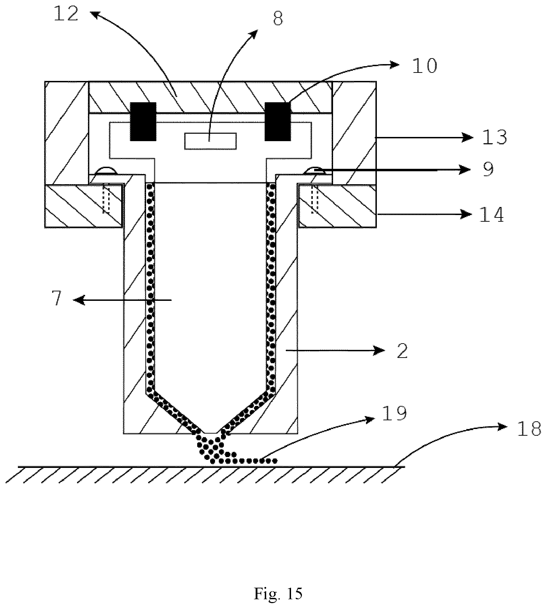

Figure 15 - illustrates a side view of an embodiment of a deposition device according to the invention;
Figure 16 - illustrates embodiments of vibration propagation elements according to the invention;
Figure 17 - illustrates an embodiment wherein the additive manufacturing system is coupled to a printer which uses cartesian coordinates.

### DESCRIPTION OF EMBODIMENTS

The present invention refers to a powder or granule deposition device (1) configured for the manufacture of objects by additive manufacturing comprising a rigid body (2), wherein the referred rigid body (2) includes an upper inner section for storage of powders or granules (3), which communicates with an internal intermediary section for discharge of the powders or granules (4), which communicates with a deposition nozzle for powders or granules (5). The powders or granules (6) for additive manufacturing are fed in the upper inner section for storage of powders or granules (3) and flow by gravity to the internal intermediary section for discharge of the powders or granules (4), and from this later section to the deposition nozzle for powders or granules (5).

Preferably, the powder or granule (6) storage area in the deposition device (1), which includes the upper inner powder or granule storage section (3) and the inner intermediary section for discharge of powders or granules (4), presents a reduction in the area of the straight section of the passage channel for powders or granules, as the longitudinal distance is traversed in the direction of the powder or granule deposition nozzle (5). Even more preferably, the gradual decrease of the straight section area of the passage channel for powders or granules begins in the transition between the upper inner powder or granule storage section (3) and the intermediary inner section for discharge of powders or granules (4).

As illustrated in figure 2, the present invention solves the problem of compaction of powders or granules inside the deposition device (1) by means of the incorporation of a vibration propagation element (7), wherein the vibration propagation element (7) is positioned inside the rigid body (2) and extends along the upper inner section for powder or granule storage (3) and along the intermediary inner section for discharge of powders or granules (4) until the deposition nozzle for powders or granules (5). Additionally, a vibration element (8) is placed in contact with the vibration propagation element (7), being configured to generate vibrations in the referred vibration propagation element (7). The generated vibrations disaggregate and decompress the powders and granules (6), avoiding obstruction in the passage through the powder or granule deposition nozzle (5), and contributing to the deposition of homogeneous lines of powders and granules on the printer table (18). Additionally, in order to avoid that the vibrations are propagated to the remaining components of the deposition device (1), namely the rigid body (2), the vibration propagation element (7) is connected to the rigid body (2) by at least one first flexible vibration damping element (10).

Preferably, a vibration control module controls the action of the vibration element (8) as regards the amplitude and frequency of the vibrations, adjusting the referred parameters to the powders or granules used.

In the preferred embodiments of the present invention, the first flexible vibration damping element (10) is connected to an upper portion of the rigid body (2), as illustrated in figure 2. Even more preferably, the upper portion of the rigid body (2) comprises at least one support selected from the group consisting of an upper rigid support (12), a side rigid support (13) and a lower rigid support (14); wherein the flexible vibration damping element (10) is connected to the referred support by means of at least one support element (9). One example of this embodiment, is illustrated at page 15, wherein two flexible vibration damping elements (10) are connected to an upper rigid support (12), which is connected to side rigid supports (13) and these are incorporated in the structure that makes up the rigid body (2).

In the preferred embodiments of the present invention, as illustrated in figure 2, the vibration propagation element (7) is additionally connected to the rigid body (2) by at least one second flexible vibration damping element (11). This second flexible vibration damping element (11) can be connected to the rigid body (2) in the intermediary inner section for discharge of powders or granules (4), which enhances the propagation of the vibrations in the proximity of the powder or granule deposition nozzle (5).

The flexible vibration damping element (10) and the second flexible vibration damping element (11) can be manufactured from several materials which suffer reversible plastic deformation, such as the polymeric elastomers, as will be understood by a person skilled in the art.

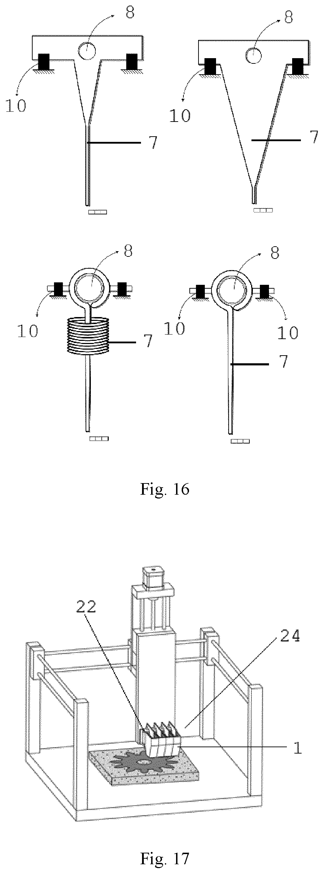

In the particularly preferred embodiments of the invention, as illustrated in figure 16, the portion of the vibration propagation element (7) which comes into contact with the powders or granules (6) inside the deposition device (1) can be selected from the group consisting of a rod; a planar surface having a decreasing transverse width in the direction of the powder or granule deposition nozzle (5); a planar surface having a decreasing transverse width in the direction of the powder or granule deposition nozzle (5) and having a terminal rod portion; and a helical surface having a terminal rod portion. In the embodiments illustrated in figure 16, the first flexible vibration damping element (10) is connected to the upper portion of the rigid body (2). In the case of the vibration propagation element (7) having in its upper portion a helical surface, this can present the form of a string or wire having a substantially circular straight section.

In the preferred embodiments of the present invention, the vibration element (8) is selected from the group consisting of a piezoelectric element, an electromechanical element, a pneumatic element or a hydraulic element. As illustrated in figure 2, the vibration element (8) contacts the upper portion of the vibration propagation element (7), whereby this arrangement enhances the propagation of the mechanical vibrations in the direction of the powder or granule deposition nozzle (5). Alternatively, the vibration element (8) can contact the vibration propagation element (7) in other portions thereof, for example in a central portion. Alternatively, a plurality of vibration elements (8) can be installed along the vibration propagation element (7).

The present invention further comprises an additive manufacturing system comprising a three-dimensional printer and a printer table (18) and a powder or granule deposition device (1) as defined in the first object of the invention.

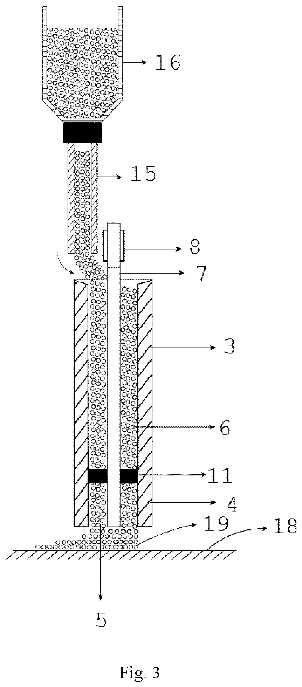

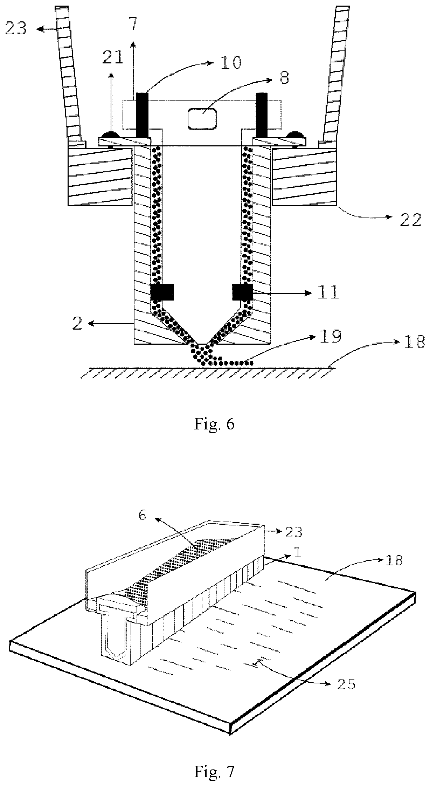

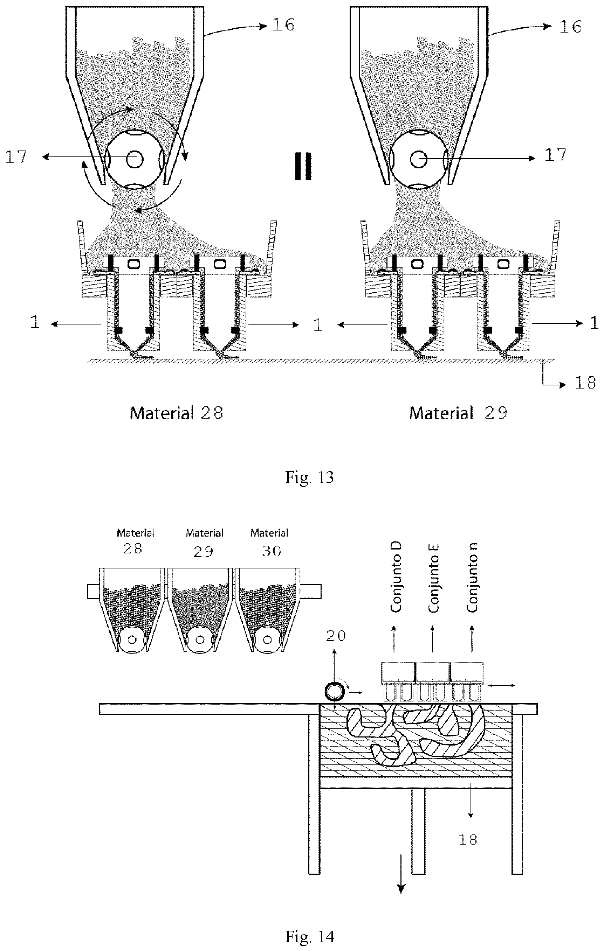

As illustrated in figure 3, in the preferred embodiments, the system of the invention includes at least one powder or granule storage recipient (16), which is connected to the deposition device (1), for example, by means of a supply conduct (15). In this sense, the additive manufacturing system of the invention can include a specific powder or granule storage recipient (16) for each deposition device (1) or a determined powder or granule storage recipient (16) can serve a plurality of deposition devices (1). As illustrated in figure 13, the powder or granule storage recipient (16) can comprise a dosage subsystem (17), which is configured to dose the powders or granules (6) for the powder or granule deposition device (1). As regards the powder or granule storage recipient (16), this may alternatively be directly connected to the deposition device (1) by means of at least one delimiting wall of the powder or granule storage recipient (23), which can be connected to the rigid body (2), as illustrated in figures 6 and 7, where a single recipient stores powders or granules (6) for a plurality of deposition devices (1) arranged in a row and with the possibility of parallel action.

The present invention can comprise the use and the incorporation in the additive manufacturing system (1) of several types of printer tables (18) and three-dimensional printers known from the state of the art, such as those conducted by guidelines throughout a system of cartesian coordinates, a delta system, a system of polar coordinates or a SCARA system.

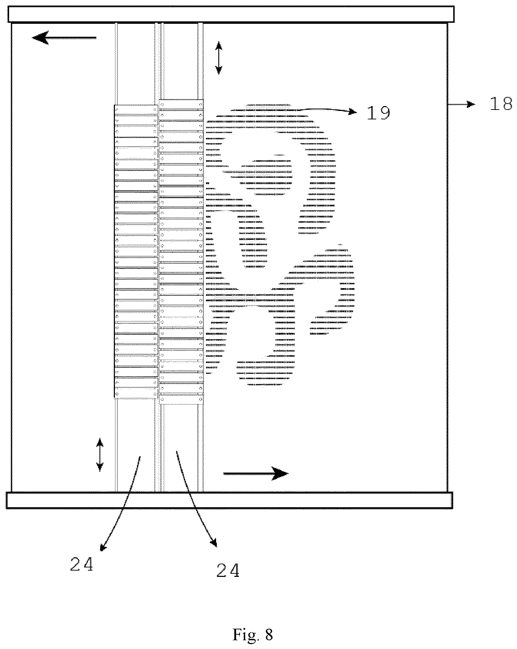

As will be appreciated by a person skilled in the art, the printers and printer tables (18) which operate under a cartesian coordinate system use the cartesian axes X-Y-Z, with the three axes being perpendicular to each other, as illustrated in figure 8. The main advantage lies in the ease of use, since it is the type of printer having the simplest mechanics, being the easiest to be calibrated, apart from the correction of errors that may arise during the use being facilitated. Figure 17 illustrates an embodiment of the present invention, wherein the additive manufacturing system is coupled to a printer that uses cartesian coordinates.

The Delta printers and printer tables (18) contain a static printer bed and the toolhead is suspended by three arms that move like a pendulum. The three arms articulated at different heights move upwards and downwards to execute the work. These printers and printer tables (18) are noted by the quality of the print in higher speeds and by the greater simplicity of the mechanics thereof, however, they are more difficult to calibrate.

The polar printers are based on the polar coordinate system. The printer table (18) spins and the extruder and the toolhead move upwards and downwards. The greater advantage is working with just two motors, apart from the motors that are linked to the extruders, which translates into lower costs.

The SCARA printers comprise a two-link arm, similar to a human arm. The extremity of the second articulation can move along the XY plan, spinning at the base and the elbow of the mechanism. On the other side, the Z movement is executed vertically.

In this manner, in the preferred embodiments of the present invention, the printer table (18) can be connected to a three-dimensional printer selected from the group consisting of a cartesian printer, a delta printer, a polar printer and a SCARA printer.

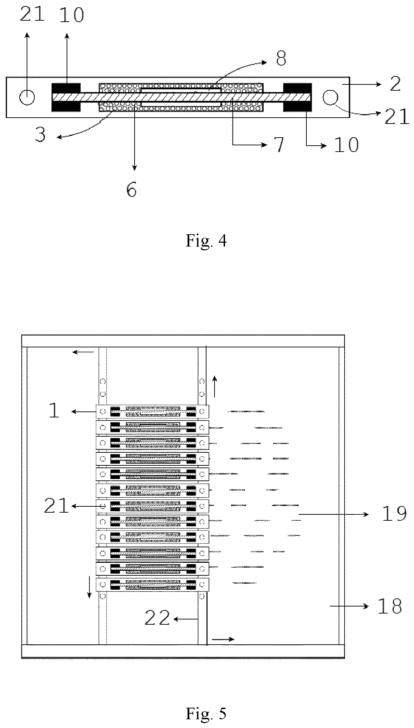

In other preferred embodiments of the present invention, the additive manufacturing system comprises a plurality of deposition devices (1), arranged in a matrix, wherein the matrix comprises at least one row of powder or granule deposition devices (24), as illustrated in figure 7. The distance between powders or granules deposited by adjacent deposition devices (25) can be adjusted by means of the distance between the deposition nozzles (5) of the respective adjacent deposition devices (1). In these embodiments, each deposition device (1) includes at least one connection element (21) to support a plurality of deposition devices (1). As shown in figure 4, two connection elements (21) are arranged in opposite positions in an upper portion of the rigid body (2). As shown in figure 5, a plurality of deposition devices (1) is fixed by means of the connection elements (21) to at least a support for a plurality of deposition devices (22), for example a pair of supports (22) arranged in parallel, to support a plurality of deposition devices (1) arranged in a row, where each deposition device (1) can deposit a line of powders or granules deposited (19) in parallel.

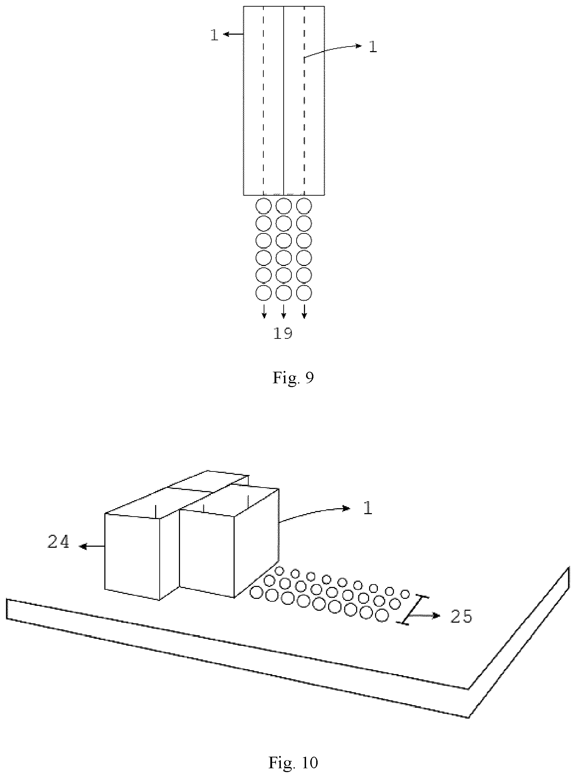

In certain embodiments of the present invention, the additive manufacturing system comprises a first matrix including a row of deposition devices (24) and a second matrix including a row of deposition devices (24), wherein a powder or granule deposition device (1) belonging to the referred first matrix is lagged as regards a powder or granule deposition nozzle (5) of a deposition device belonging to the referred second matrix. This embodiment is illustrated in figures 8, 9 and 10 which have the advantage that the distance between powders or granules deposited by adjacent deposition devices (25) being decreased, considering the lag between the nozzles (5) of the adjacent rows of deposition devices (24). The action of the vibration propagation elements (7) where each one of the deposition devices (1) and the referred lag between adjacent rows propitiates that the distances between the powder or granule lines (6) deposited be reduced and each one of these lines has higher levels of homogeneity.

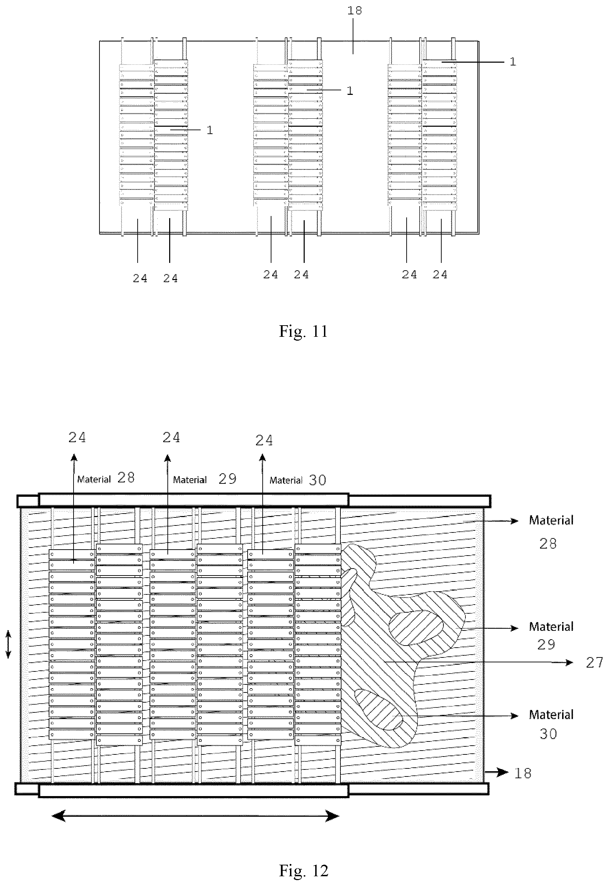

The system of the present invention also admits variations wherein several combinations of rows of deposition devices (24) are placed in parallel, wherein each row (24) or each combination of rows (24) receives powders or granules (6) in a determined composition, allowing the system to operate simultaneously with several different materials, as illustrated in figure 11. In this sense, an object prepared by additive manufacturing (27), can be prepared from a plurality of rows of deposition devices (24), each one of them being supplied with a different deposition material, for example, a first row (24) being supplied with a first deposition material (28), a second row (24') being supplied with a second deposition material (29) and a third row (24") being supplied with a third deposition material (30), as shown in figure 12.

As illustrated in figure 14, the system of the present invention can comprise a compaction roll (20), which acts in compacting the lines of materials that are deposited, outlining and correcting the height of the deposited lines, as they are introduced on the printer table (18). The compaction roll (20) can be a component that is directly connected to and solidary with the deposition device (1) or installed in an independent manner, for example connected to the structure of the printer table.

In the preferred embodiments of the present invention, the powders or granules (6) are selected from one or more of the group consisting of thermoplastic polymers, thermosetting polymers, elastomers, resins, metals, metallic alloys, macromolecules, cements and ceramics.

As non-limitative examples, the powders or granules of polymers comprise polyethylene, polypropylene, polystyrene, polyester, polycaprolactone, polyamide, polyvinyl alcohol, the mixtures thereof and copolymers.

As non-limitative examples, the powders or granules of elastomers comprise natural rubber, butadiene rubber, butadiene-styrene rubber, halogenated polyisobutylene rubber and combinations thereof.

As non-limitative examples, the metal or metallic alloy powders or granules comprise steel, bronze, copper, titanium and tungsten carbide.

As non-limitative examples, the ceramic powders or granules comprise alumina, porcelain, stoneware, pottery, hydroxyapatite and combinations thereof.

Alternatively, there can also be used as powders or granules macromolecular materials, for example wood and cork, as well as other vegetable materials. Additionally, there can also be used inorganic materials, for example cements, sand, glass, silica, carbon black and salts, such as for example, sodium chloride and combinations thereof.

In the system and in the process of the present invention there can be used several different materials throughout the manufacture of an object. The connection of the materials will be executed in several manners, for example in a chemical manner, a physical manner, or by means of heat transfer. A primary factor is that the material or combination of materials in granules or powders do not connect to the material or combination of materials which correspond to the object.

As will be understood by a person skilled in the art, subsequently to the deposition step of the lines of material of the object and, optionally, the lines of the support material, there may be executed one or more complementary processing steps, namely the drying, the sintering, the fusion, the calcination, the addition of resins for curing the deposited materials or the addition of water for removal of the support material. In the case of addition of resins, these act as cure agents, which can be induced by electro-magnetic radiation, wherein the referred radiation can present wavelengths in the interval of the ultraviolet, the visible or infrared light, depending on the chemical characteristics of the resin. In the case of addition of water, this acts as a Chemical agent for cure of certain mixtures of materials. The use of these subsequent steps will be illustrated by means of the following non-limitative examples.

Therefore, subsequently to the deposition of powders or granules (6) on the printer table (18), as will be appreciated by a person skilled in the art, there can be used different solidifying or transforming techniques can be used, for example, laser radiation, infrared radiation, ultraviolet laser radiation or in another pertinent wavelength, the projection of light or deposition of a binder.

In a first example of the application of the present invention, we can have a mixture comprising cement, sand, filler and natural or synthetic fibers as material of the object and only sand as support material. At the conclusion of the deposition of the lines of material of the piece and the support material with the deposition device of the present invention, water is deposited to consolidate the object, whereby the water may be deposited with activation of the vibration element (8) of the device of the invention. Next, the water is drained and the object is dried. The sand used as support material is next removed, and may be reused, isolating the consolidated object.

In a second example of the application of the invention, we can also have silica as the support material and steel as the material of the object. At the conclusion of the deposition of the lines of material of the object and the support material with the deposition device of the present invention, a block of bronze is placed over the object, the set is forwarded to the kiln at the fusion temperature of the bronze, which will infiltrate in the steel powders, not wetting the silica. At the end the silica is removed and we shall have the metallic object inside.

In a third example of the application, there are used micronized granules of recycled tire as support material and a mixture of micronized tire with a micronized thermoplastic, for example polycaprolactone (PLC) or polyamide (PA), as material of the object. At the conclusion of the deposition of the lines of materials of the object and the support the piece is taken to a hothouse, being heated until sintering temperature of temperature of fusion of the thermoplastic which agglutinates the dispersed tire micronized load in the medium. In this phase there occurs the disaggregation of the support material based on tire, since this has no binder and does not fuse. Thus, the object can be isolated and removed, considering the disaggregation of the support material.

In a fourth example of the application a mixture of cork granules with thermoplastic or elastomeric materials is used as materials of the object and only cork granules as support material. At the conclusion of the deposition of the lines of the materials of the object and the support, the set is heated to proceed with the separation of the support material.

In a fifth example of the application a mixture of cork granule compound with a thermoplastic is used as material of the object, providing the deposition of this mixture in the areas destined to the object itself. Additionally, there are deposited cork granules in the support areas. At the conclusion, the set is heated and the part that contains the thermoplastic will be aggregated. The support material will not become aggregated and can be reused.

In a sixth example of application, there are used mixtures of water-soluble binders in the form of powders, such as micronized polyvinyl alcohol (PVA), with granules or micronized of wood as materials of the object. Next, the mixture of materials of the object is deposited in the piece area and in the support area only the wood micronized is deposited. At the conclusion of the deposition process of the different materials, a thermal treatment is executed with water steam, where the PVA acts as a binder.

In a seventh example of application, there is used a mixture of sand with a water-soluble alkaline phenolic resin as material of the object and only sand is used as support material. At the conclusion of the deposition process of the different materials, water is deposited and a carbon dioxide stream is passed through the set, wherein the sand with the alkaline phenolic resin is hardened by means of the carbon dioxide gasification.

As used in this description, the expressions "around" and "approximately" refer to an interval of values of more or less 10% of the number specified.

As used throughout this patent application, the expression "or" is used in the inclusive sense instead of the exclusive sense, unless the exclusive sense is clearly defined in a specific situation. In this context, a sentence of the type "X uses A or B" must be interpreted as including all possible pertinent inclusive combinations, for example "X uses A", "X uses B" and "X uses A and B".

As used throughout this patent application, the indefinite articles "a" or "one" must be generally interpreted as "one or more", unless the sense of a singular embodiment is clearly defined in a specific situation.

As presented in this description, the expressions related to examples must be interpreted with the purpose of illustrating an example of something and not to indicate a preference.

As used in this description, the expression "substantially" means that the real value is within the interval of around 10% of the desired value, variable or related limit, particularly within around 5% of the desired value, variable or related limit or specially within the 1% of the desired value, variable or related limit.

The subject matter described above is provided as an illustration of the present invention and, therefore, cannot be interpreted so as to limit it. The terminology used herein with the purpose of describing preferred embodiments of the present invention, must not be interpreted to limit the invention. As used in the specification, the definite and indefinite articles, in their singular form, aim at the interpretation of also including the plural forms, unless the context of the description indicates, explicitly, the contrary. It will be understood that the expressions "comprise" and "include", when used in this description, specify the presence of the characteristics, the elements, the components, the steps and the related operations, however, they do not exclude the possibility of other characteristics, elements, components, steps and operations also being contemplated.

All the alterations, providing that they do not modify the essential characteristics of the claims that follow, must be considered as being within the scope of protection of the present invention.

### REFERENCE SIGNS LIST

1. A deposition device for powders or granules
2. A rigid body
3. An upper inner powder or granule storage section
4. An intermediary inner section for discharge of powders or granules.
5. A deposition nozzle for powders or granules
6. Powders or granules for additive manufacturing
7. A vibration propagation element
8. A vibration element
9. A support element
10. A first flexible vibration damping element
11. A second flexible vibration damping element
12. An upper rigid support
13. A lateral rigid support
14. A lower rigid support
15. A supply conduct
16. A powder or granule storage recipient
17. A dosage subsystem for powders or granules
18. A printer table
19. Deposited powders or granules
20. A compaction roll for powders or granules
21. A connection element to a support for a plurality of deposition devices
22. A support for a plurality of deposition devices
23. A delimiting wall of a recipient for powder or granule storage
24. A row of deposition devices
25. A distance between powders or granules deposited by adjacent deposition devices
26. A digital model of an object
27. An object prepared by additive manufacturing
28. A first deposition material
29. A second deposition material
30. A third deposition material

### CITATION LIST

Follows the list of citations:

### PATENT LITERATURE

### NON-PATENT LITERATURE

Chianrabutra et al. "A Dry Powder Material Delivery Device for Multiple Material Additive Manufacturing"; Engineering Sciences Unit, Faculty of Engineering and the Environment, University of Southampton

## Claims

1. A powder or granule deposition device (1) configured for the manufacture of objects by additive manufacturing comprising a rigid body (2), wherein the referred rigid body (2) includes an upper inner powder or granule storage recipient (3), which communicates with an inner intermediary section for powder or granule deposition (4), which communicates with a powder or granule deposition nozzle (5), **characterized by:**
a vibration propagation element (7) being arranged inside the rigid body (2) and extending along the upper inner powder or granule storage section (3) and along the intermediary inner section for discharge of powders or granule (4) to the powder or granule deposition nozzle (5); **and by**
a vibration element (8) being arranged in contact with the vibration propagation element (7), being configured to generate vibrations in the referred vibration propagation element (7);
wherein the vibration propagation element (7) is connected to the rigid body (2) by at least one first flexible vibration damping element (10).

2. The powder or granule deposition device (1) according to the preceding claim, **characterized by** the vibration propagation element (7) being additionally connected to the rigid body (2) by at least one second flexible vibration damping element (11).

3. The powder or granule deposition device (1) according to any one of the preceding claims, **characterized by** the first flexible vibration damping element (10) being connected to an upper portion of the rigid body (2).

4. The powder or granule deposition device (1) according to the preceding claim, **characterized by** the upper portion of the rigid body (2) comprising at least one support selected from the group consisting of an upper rigid support (12), a lateral rigid support (13) and a lower rigid support (14); wherein the flexible vibration damping element (10) is connected to the referred support by means of at least one support element (9).

5. The powder or granule deposition device (1) according to any one of claims 2 to 4, **characterized by** the second flexible vibration damping element (11) being connected to the rigid body (2) in the intermediary inner section for discharge of powders or granules (4).

6. The powder or granule deposition device (1) according to any one of the preceding claims, **characterized by** a portion of the vibration propagation element (7) which comes into contact with powders or granules (6) being selected from the group consisting of a rod; a planar surface having a decreasing transverse width in the direction of the powder or granule deposition nozzle (5); a planar surface having a decreasing transverse width in the direction of the powder or granule deposition nozzle (5) and having a terminal rod portion; and a helical surface having a terminal rod portion.

7. The Powder or granule deposition device (1) according to any one of the preceding claims, **characterized by** the vibration element (8) being selected from the group consisting of a piezoelectric element, an electromechanical element, a pneumatic element or a hydraulic element.

8. A system for additive manufacturing comprising a three-dimensional printer and a printer table (18), **characterized by** including at least one powder or granule deposition device (1) as defined in any of the preceding claims.

9. The system for additive manufacturing according to the preceding claim, **characterized by** including at least one powder or granule storage recipient (16), which is connected to the powder or granule deposition device (1).

10. The system for additive manufacturing according to the preceding claim, **characterized by** the powder or granule storage recipient (16) comprising a dosage subsystem (17) configured for dosing the powders or granules (6) for the powder or granule deposition device (1).

11. The system for additive manufacturing according to the any one of claims 8 to 10, **characterized by** the printer table (18) being connected to a three-dimensional printer selected from the group consisting of a cartesian printer, a delta printer, a polar printer and a SCARA printer.

12. The system for additive manufacturing according to the any one of claims 8 to 11, **characterized by** comprising a plurality of powder or granule deposition devices (1), arranged in a matrix, wherein the matrix comprises at least one row of powder or granule deposition devices (24).

13. The system for additive manufacturing, according to the preceding claim, **characterized by** the powder or granule deposition devices (1) present in the row of powder or granule deposition devices (24) being connected to a support for a plurality of deposition devices (22) by means of the connection elements (21).

14. The system for additive manufacturing, according to any one of claims 12 to 13, **characterized by** comprising a first matrix including a row of deposition devices (24) and a second matrix including a row of deposition devices (24), wherein a powder or granule deposition nozzle (5) of a deposition device (1) belonging to the referred first matrix having a lag regarding the powder or granule deposition nozzle (1) belonging to the referred second matrix.

15. The system for additive manufacturing, according to any one of claims 12 to 14, **characterized by** each row of deposition devices (24) being able to be fed with a specific composition of powders or granules (6) for additive manufacturing.

16. The system for additive manufacturing, according to any one of claims 8 to 15, **characterized by** including a compaction roll (20) for powders or granules.

17. A process for the additive manufacturing of an object, **characterized by** using the system for additive manufacturing, as defined in any one of claims 8 to 16, **and by** comprising the following steps:
i. feeding of at least one deposition device (1), as defined in any one of claims 1 to 7, with powders or granules (6);
ii. activation of the deposition device (1) by means of the activation of a vibration propagation element (7) by a vibration element (8);
iii. deposition by the deposition device (1) of a plurality of lines of powders or granules (19) over a printer table (18).

18. The process for the additive manufacturing of an object, according to the preceding claim, **characterized by** the deposited material being solidified or transformed after the step iii) of the deposition by the deposition device (1) of a plurality of lines of powders or granules (19) by a step selected from the group consisting of laser radiation, infrared radiation, ultraviolet laser radiation, light projection of deposition of a binder.

19. The process for the additive manufacturing of an object, according to the preceding claim, **characterized by** subsequently to the solidification or transforming of the deposited material there being executed at least one step selected among drying, the sintering, the fusion, the calcination, the addition of resins for curing the deposited materials or the addition of water for removal of the support material.

20. The process for the additive manufacturing of an object, according to any one of claims 17 to 19, **characterized by** the additive manufacturing system including a plurality of deposition devices (1) arranged in at least one row of deposition devices (24).

21. The process for the additive manufacturing of an object, according to the preceding claim, **characterized by** each row of deposition devices (24) being fed by a specific powder or granule composition (6) for additive manufacturing.
